# EUROPÄISCHE PATENTSCHRIFT

(11) **EP 3 049 210 B1**
(45) Veröffentlichungstag und Bekanntmachung des Hinweises auf die Patenterteilung: **24.10.2018**
(21) Anmeldenummer: 14790008.8
(22) Anmeldetag: 24.09.2014
(51) Int. Cl.: B23K 9/08, B23K 20/12, F15B 1/02, F15B 7/00

(54) **PRESSSCHWEISSVORRICHTUNG UND PRESSSCHWEISSVERFAHREN UNTER VERWENDUNG EINES EINEN ELEKTROHYDRAULISCHEN DIREKTANTRIEB AUSGEBILDETEN VORSCHUBANTRIEBS**
PRESSURE WELDING DEVICE AND PRESSURE WELDING METHOD USING AN ADVANCING DRIVE DESIGNED AS AN ELECTRO-HYDRAULIC DIRECT DRIVE
DISPOSITIF ET PROCÉDÉ DE SOUDAGE PAR PRESSION UTILISANT UN DISPOSITIF D'AVANCEMENT COMPRENANT UN ENTRAINEMENT ELECTROHYDRAULIQUE

(30) Priorität: 24.09.2013 DE 202013104357 U
(43) Veröffentlichungstag der Anmeldung: 03.08.2016
(73) Patentinhaber: KUKA Deutschland GmbH, 86165 Augsburg (DE)
(72) Erfinder: BÜCHLER, Michael, 86179 Augsburg (DE); FISCHER, Otmar, 86150 Augsburg (DE); SCHNEIDER, Klaus, 86316 Friedberg (DE); HAUCK, Thomas, 86438 Kissing (DE)
(74) Vertreter: Ernicke, Klaus Stefan
(86) Internationale Anmeldenummer: PCT/EP2014/070307
(87) Internationale Veröffentlichungsnummer: WO 2015/044166

(56) Entgegenhaltungen:
- DE-A1- 19 902 357
- DE-U1-202008 005 534
- DATABASE WPI Week 201369 Thomson Scientific, London, GB; AN 2013-S13254 XP002736315, -& CN 203 003 339 U (SHANGHAI SHENGCHUN MACHINERY CO LTD) 19. Juni 2013 (2013-06-19)
- DATABASE WPI Week 198526 Thomson Scientific, London, GB; AN 1985-157617 XP002736316, -& SU 1 127 725 A (PROEKTIN INST) 7. Dezember 1984 (1984-12-07)

## Beschreibung

Die Erfindung betrifft eine Pressschweißvorrichtung, insbesondere Reibschweißvorrichtung, und ein Pressschweißverfahren mit den Merkmalen im Oberbegriff des Vorrichtungsanspruchs 1 und des Verfahrensanspruchs 9.

Eine Reibschweißvorrichtung ist aus der CN 203003339 U und der SU 1 127 725 A bekannt. Sie weist jeweils einen hydraulischen Vorschubantrieb für die Prozessachse und das Werkstück auf. Der hydraulische Vorschubantrieb umfasst einen hydraulischen Zylinder, eine motorisch angetriebene Pumpe, eine Ventilanordnung sowie einen offenen Hydraulikkreis mit einem belüfteten Tank und wird über die Ventile gesteuert.

Eine andere Reibschweißvorrichtung ist aus der Praxis bekannt. Sie weist eine Plastifizierungs- bzw. Reibeinrichtung und eine Positionier- und Staucheinrichtung mit einer Vorschubeinrichtung für ein Werkstück auf. Die Vorschubeinrichtung hat einen steuerbaren Hydraulikzylinder, der mit einer externen Hydraulikeinheit verbunden ist, die auch andere Verbraucher der Pressschweißvorrichtung versorgt. Die Hydraulikeinheit besitzt einen großen Druckspeicher, der von einer motorbetriebenen Pumpe gespeist wird und aus dem das Hydraulikmedium über ein Servoventil dem Hydraulikzylinder zugeführt wird. Das Servoventil ist mit einer Steuerung der Reibschweißvorrichtung verbunden und dient zur Steuerung und Regelung des Zylindervorschubs.

Eine ähnliche Reibschweißvorrichtung mit Servoventil ist aus der DE 199 02 357 A1 (Basis für den Oberbegriff der Ansprüche 1 und 9) bekannt. Die DE 20 2004 009 909 U1 zeigt eine Reibschweißmaschine mit zwei Zylindern für Stauchhub und Eilgang.

Die DE 20 2008 005 534 U1 offenbart eine Pressschweißvorrichtung, deren Plastifizierungseinrichtung als Schmelzeinrichtung mit einem magnetisch bewegten Lichtbogen ausgebildet ist und deren Staucheinrichtung einen steuerbaren Vorschubantrieb mit einem Hydraulikzylinder aufweist.

Es ist Aufgabe der vorliegenden Erfindung, die Pressschweißtechnik weiter zu verbessern.

Die Erfindung löst diese Aufgabe mit dem Merkmalen des Vorrichtungsanspruchs 1 und des Verfahrensanspruchs 9. Die beanspruchte Pressschweißtechnik, d.h. die Pressschweißvorrichtung und das Pressschweißverfahren, haben verschiedene Vorteile.

Der Bau- und Montageaufwand sowie der Platzbedarf des Vorschubantriebs werden verringert. Verbesserungen gibt es auch bei der Energieeffizienz und der Schallemission. Besonders vorteilhaft sind die Verbesserung der Dynamik und des Wirkungsgrads durch eine Massenverringerung. Der steuertechnische Aufwand und der Sicherheitsaufwand werden ebenfalls reduziert.

Andererseits können die Steuer- und Regelpräzision des Vorschubs signifikant verbessert werden. Es kann eine direkte Regelung des Vorschubs am Zylinder erfolgen. Durch Einsatz eines steuerbaren Motors, insbesondere eines elektrischen Servomotors, kann auch die Ansteuerung vereinfacht werden.

Der hydraulische Zylinder und die einfach oder mehrfach vorhandene Pumpe nebst Antriebsmotor(en) sind in einen geschlossenen Hydraulikkreis eingebunden. An den Hydraulikkreis ist ggf. noch ein Druckausgleich angeschlossen. Die Pumpe(n) und der Kolben des hydraulischen Zylinders sind durch den geschlossenen Hydraulikkreis jeweils beidseitig eingespannt. Der bisherige Aufwand an Ventiltechnik, Verrohrung und Ölkreislauf mit separatem Hydraulikaggregat kann reduziert werden. Die Kühlleistung kann gemindert werden. Zudem ergeben sich durch Reduzierung der installierten Leistung Energiespareffekte.

Der hydrostatische Vorschubantrieb kann direkt an der Pressschweißvorrichtung und vor allem direkt am hydraulischen Zylinder angebaut werden. Dies spart Platz und Bauaufwand. Günstig ist auch die Verbindung von Pumpe(n), Antriebsmotor(en) und Hydraulikkreis zu einer kompakten Baueinheit, die zudem leicht montiert und gewartet werden kann.

Der hydrostatische Vorschubantrieb kann mehrstufig sein, wobei die Leistung, insbesondere die Vorschubgeschwindigkeit, an unterschiedliche Prozesserfordernisse angepasst werden kann. Hierüber kann z.B. ein Eilgang für Vorhub und/oder Rückhub realisiert werden. Dies erhöht die Leistungsfähigkeit und die Wirtschaftlichkeit der Pressschweißtechnik. Ein Eilgang kann für einen Teil einer Vorschubbewegung vorgesehen sein, wobei im anderen Teil eine verlangsamte Vorschubbewegung, insbesondere ein Schleichgang, erfolgt. Die besagte Leistungsanpassung kann durch ein selektives Beschalten einer Anordnung von mehreren Pumpen des hydrostatischen Vorschubantriebs erfolgen.

Der Bauaufwand für die Mehrstufigkeit kann niedrig gehalten werden. In der bevorzugten Ausführungsform sind zwei oder mehr Pumpen im Hydraulikkreis vorhanden, von denen zumindest eine bedarfsweise zugeschaltet und weggeschaltet werden kann. Dies lässt sich in besonders einfacher Weise durch ein Mehrwegeventil im Hydraulikkreis realisieren.

Der steuerbare oder regelbare hydrostatische Vorschubantrieb kann nur für die Prozessachse und für den Vorschub vorgesehen sein. Evtl. andere hydraulische Elemente an der Pressschweißvorrichtung oder in deren Umfeld können von einer anderen Hydraulikeinheit bedient werden.

Ein Verfahren zum Pressschweißen von Werkstücken mittels einer gesteuerten Pressschweißvorrichtung sieht vor, dass die Werkstücke mittels einer Plastifizierungseinrichtung plastifiziert und mittels einer Positionier- und Staucheinrichtung relativ zueinander positioniert sowie entlang einer Prozessachse gestaucht werden, wobei ein Werkstück entlang der Prozessachse mittels einer Vorschubeinrichtung mit einem gesteuerten oder geregelten hydraulischen Vorschubantrieb bewegt wird. Dabei erfolgt der Vorschub mit einem Vorschubantrieb, der als gesteuerter oder geregelter elektrohydraulischer Direktantrieb für die Prozessachse ausgebildet ist. Der Vorschubantrieb weist einen hydraulischen Zylinder und eine damit verbundene sowie von einem elektrischen Antriebsmotor, insbesondere einem elektrischem Servomotor, angetriebene Pumpe auf, wobei der Vorschubantrieb über den elektrischen Antriebsmotor gesteuert oder geregelt wird und wobei der Vorschubantrieb einen geschlossenen Hydraulikkreis aufweist, der den/die Zylinder und die Pumpe(n) verbindet.

Die Werkstücke können durch Reibschweißen oder durch Schweißen mit einem magnetisch bewegten Lichtbogen verbunden werden. Die Werkstücke werden beim Pressschweißen an ihren einander zugekehrten und zu verbindenden Stirnseiten plastifiziert. Dies kann durch Reibkontakt und lineare oder rotatorische Relativbewegung oder durch den bewegten Lichtbogen geschehen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Reibschweißvorrichtung in schematischer Seitenansicht,
- Figur 2:: einen Vorschubantrieb mit einem Hydraulikkreis und
- Figur 3:: ein Bewegungsdiagramm des Vorschubantriebs.

Die Erfindung betrifft eine Pressschweißvorrichtung (1) und ein Pressschweißverfahren.

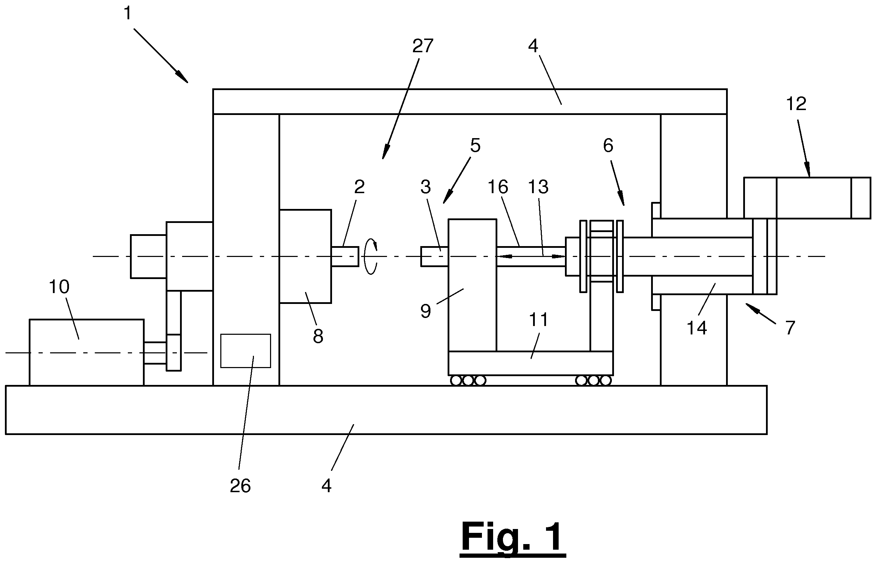

Die Pressschweißvorrichtung (1) und das Pressschweißverfahren können in unterschiedlicher Weise ausgebildet sein. In Figur 1 ist eine Ausbildung als Reibschweißvorrichtung bzw. Reibschweißverfahren dargestellt. In einer anderen und nicht dargestellten Ausführungsform kann die Pressschweißvorrichtung (1) als Schweißvorrichtung mit einem magnetisch bewegten Lichtbogen ausgebildet sein. Das Pressschweißverfahren ist hierzu entsprechend ausgestaltet.

Die Pressschweißvorrichtung (1) weist eine Plastifizierungseinrichtung (5) und eine Positionier- und Staucheinrichtung (6) für die zu verschweißenden Werkstücke (2,3) auf. Die Plastifizierung, das Positionieren und Stauchen findet jeweils an den einander zugekehrten und zu verschweißenden Stirnseiten der Werkstücke (2,3) statt. Ferner beinhaltet die Pressschweißvorrichtung (1) eine Steuerung (26) und eine Vorschubeinrichtung (7) für ein Werkstück (2,3) und für die Prozessachse (13). Die Vorschubeinrichtung (7) hat einen Vorschubantrieb (12), der als steuerbarer oder regelbarer elektrohydraulischer Direktantrieb für die Prozessachse (13) ausgebildet ist.

Die Plastifizierungseinrichtung (5) ist im dargestellten Ausführungsbeispiel als Reibeinrichtung ausgebildet. Hierbei werden die miteinander zu verschweißenden Werkstücke (2,3) stirnseitig miteinander in Kontakt gebracht und unter Anpressdruck relativ zueinander bewegt, insbesondere um die Prozessachse (13) gedreht. Die Reibungswärme plastifiziert die Kontaktbereiche der Werkstücke (2,3), wobei die Werkstücke (2,3) entlang der linearen Prozessachse (13) oder Vorschubachse weiter aufeinander zu bewegt werden. Am Ende dieser Reibphase kann ein zusätzlicher Stauchhub entlang der Prozessachse (13) erfolgen. Beim Reibschweißen tritt eine Verkürzung der verschweißten Werkstücke (2,3) unter Ausformung eines Wulstes an der Verbindungsstelle oder Schweißstelle ein.

Bei der alternativen Ausführungsform der Pressschweißvorrichtung (1) ist die Plastifizierungseinrichtung (5) als Schmelzeinrichtung mit einem magnetisch bewegten Lichtbogen ausgebildet. Hierbei wird mittels einer Stromquelle eine Spannung an die metallischen Werkstücke (2,3) angelegt, wobei die Werkstücke (2,3) zunächst entlang der Prozessachse (13) stirnseitig in Kontakt miteinander gebracht und anschließend wieder ein Stück voneinander distanziert werden, wobei ein Lichtbogen zwischen den Werkstückstirnseiten gezündet wird. Mittels einer magnetischen Treibeinrichtung, z.B. einer elektromagnetischen steuerbaren Spulenanordnung, wird der Lichtbogen angetrieben und läuft umfangseitig an den Werkstückrändern um, wobei die Werkstückränder angeschmolzen werden. Nach Erreichen eines gewünschten Schmelzgrades werden die Werkstücke (2,3) anschließend mit einem Stauchhub entlang der Prozessachse (13) axial aufeinander zubewegt und in Schweißverbindung miteinander gebracht.

Im gezeigten Ausführungsbeispiel werden zwei Werkstücke (2,3) miteinander verschweißt, die dabei in Werkstückhaltern (8,9) lösbar gehalten sind. Die Werkstückhalter (8,9) können z.B. als steuerbare, insbesondere vollautomatische Spanneinrichtungen ausgebildet und mit der Steuerung (26) verbunden sein. Die Werkstücke (2,3) bestehen bevorzugt aus Metall, wobei sie gleiche oder unterschiedliche Werkstoffe aufweisen können. Sie können insbesondere ein gleiches oder unterschiedliches Schmelzverhalten haben. Die Werkstücke (2,3) sind ferner bevorzugt elektrisch leitend, insbesondere zum Schweißen mit einem magnetisch bewegten Lichtbogen.

Alternativ können mehr als zwei Werkstücke (2,3) in einem Prozess miteinander verschweißt werden. Hierfür kann z.B. eine sogenannte Doppelkopf-Reibschweißvorrichtung zum Einsatz kommen, die einen Zentrumsspanner für ein zentrales und z.B. drittes Werkstück aufweist.

Bei einer Reibschweißvorrichtung (1) wird für die vorgenannte Relativbewegung der Werkstücke (2,3) zur Erzeugung der Reibwärme z.B. ein Drehantrieb (10) eingesetzt. Dieser kann auf den in Axialrichtung bzw. entlang der Prozessachse (3) z.B. stationären Werkstückhalter (8) einwirken und diesen um die Prozessachse (13) mit dem Werkstück (2) drehen. Der Drehantrieb (10) weist einen mit der Steuerung (26) verbundenen steuerbaren oder regelbaren Antriebsmotor, insbesondere einen Elektromotor, auf. Der Drehantrieb (10) kann zudem eine oder mehrere Schwungmassen beinhalten.

Das andere Werkstück (3) ist entlang der Prozessachse (13) axial verschieblich, z.B. mittels eines Schlittens (11) oder dgl., angeordnet und wird vom Vorschubantrieb (12) beaufschlagt. Das Werkstück (3) kann dabei in seinem Werkstückhalter (9) gehalten sein, der vom Vorschubantrieb (12) beaufschlagt wird. Das Werkstück (3) ist drehfest im Werkstückhalter (9) angeordnet. Alternativ kann auch für das andere Werkstück (3) ein Drehantrieb vorgesehen sein. Dies ist z.B. bei einer vorerwähnten Doppelkopf-Reibschweißvorrichtung (1) der Fall. In einer weiteren Variante können zwei oder mehr Werkstücke entlang der Prozessachse (13) axial verschoben werden. Ferner ist es möglich, nur ein Werkstück zu drehen und axial zu verschieben.

Die Vorschubeinrichtung (7) beinhaltet außer dem Vorschubantrieb (12) auch den Schlitten (11), der an einem Maschinengestell (4) entlang der Prozessachse (13) beweglich, insbesondere verschiebbar, gelagert ist. Er kann außerdem gemäß Figur 1 am Mantel eines Zylinders (14) der Vorschubeinrichtung (7) axial geführt sein. In einer anderen und nicht dargestellten Ausführungsform kann der Schlitten (11) entfallen, wobei der Werkstückhalter (9) direkt am Vorschubantrieb (12) angeordnet ist.

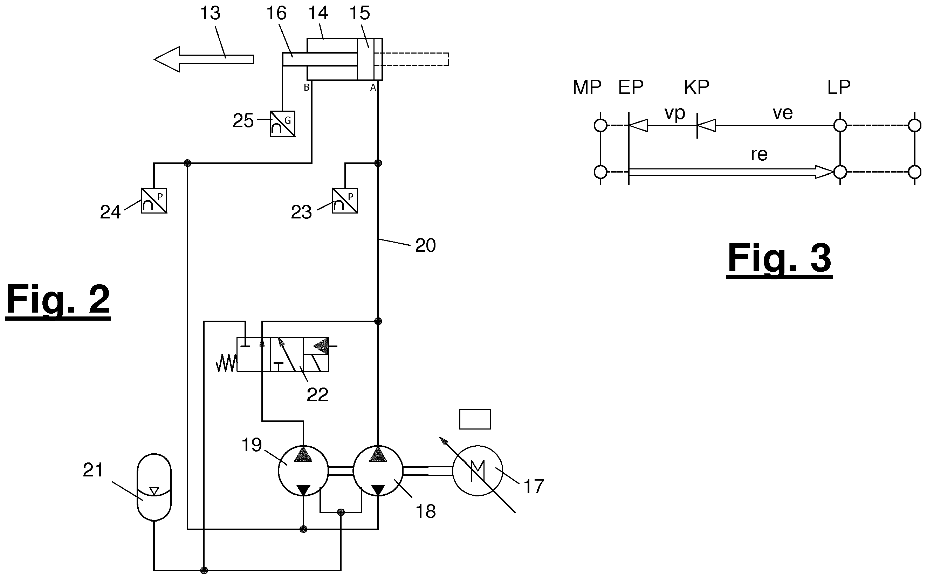

Der steuerbare und bevorzugt regelbare Vorschubantrieb (12) ist mit der Steuerung (26) verbunden. Er weist in seiner Ausbildung als elektrohydraulischer Direktantrieb einen hydraulischen Zylinder (14) und eine damit verbundene sowie von einem elektrischen Antriebsmotor (17) angetriebene Pumpe (18,19) auf. Diese Antriebskomponenten (14,17,18,19) können mehrfach vorhanden sein. Der Vorschubantrieb (12) weist ferner einen geschlossenen Hydraulikkreis (20) auf, der den/die Zylinder (14) und die Pumpe(n) (18,19) verbindet. An den Hydraulikkreis (20) kann auch ein Druckausgleich (21), z.B. der in Figur 2 gezeigte Druckausgleichbehälter, angeschlossen sein.

Der Vorschubantrieb (12) kann mehrstufig ausgebildet sein. Bei der in Figur 1 und 2 gezeigten Ausführungsform weist der Vorschubantrieb (12) einen einzelnen hydraulischen Zylinder (14) auf, der mit mehreren, insbesondere zwei oder drei, Pumpen (18,19) verbunden ist. In der gezeigten Ausführungsform haben die mehreren Pumpen (18,19) einen gemeinsamen Antriebsmotor (17). Sie können alternativ jeweils einen eigenen Antriebsmotor aufweisen.

Bei einer Mehrfachanordnung von Pumpen (18,19) zur gemeinsamen Beaufschlagung eines hydraulischen Zylinders (14) kann mindestens eine Pumpe (18,19) zugeschaltet oder weggeschaltet werden. Das Hydraulikmedium, z.B. ein Hydrauliköl, kann dadurch bedarfsweise von einer oder mehreren Pumpen (18,19) gefördert und dem Zylinder (14) direkt zugeführt werden.

Das Zu- und Wegschalten einer Pumpe (18,19) kann auf unterschiedliche Weise erfolgen. Im gezeigten Ausführungsbeispiel ist die zweite Pumpe (19) über ein hydraulisches Schaltelement (22), z.B. ein hydraulisches Mehrwegeventil, in den Hydraulikkreis (20) eingebunden bzw. angeschlossen. Bei durchgeschaltetem Mehrwegeventil (22) fördern beide Pumpen (18,19) gemeinsam das Hydraulikmedium in den Zylinder (14). In der anderen Stellung des Mehrwegeventils wird die Förderverbindung der zweiten Pumpe (19) zum Zylinder (14) gesperrt und das Hydraulikmedium über einen Bypass gefördert.

Die Pumpen (18,19) können gleichartig ausgebildet sein. Es handelt sich vorzugsweise um 2-Quadrantenpumpen oder 4-Quadrantenpumpen. In konstruktiver Hinsicht sind sie bevorzugt als Innenzahnradpumpen ausgeführt. Sie werden in der gezeigten Ausführungsform bevorzugt gemeinsam von der Abtriebswelle des Antriebsmotors (17) beaufschlagt.

Der Vorschubantrieb (12) ist über den einfach oder mehrfach vorhandenen Antriebsmotor (17) steuerbar oder regelbar. Der Antriebsmotor (17) ist hierfür mit der Steuerung (26) verbunden. Auf Servoventile oder andere hydraulische Steuer- oder Regelmittel im Hydraulikkreis (20) kann verzichtet werden.

Der elektrische Antriebsmotor (17) kann konstruktiv in geeigneter Weise zur Erzielung des gewünschten Steuer- und Regelverhaltens ausgebildet sein. Er kann z.B. als elektrischer Servomotor, insbesondere als Gleichstrommotor ausgebildet sein. Alternativ ist eine Ausbildung als Drehstrommotor bzw. Wechselstrommotor möglich, der z.B. mittels eines Frequenzumrichters angesteuert wird.

Der Vorschubantrieb (12) bildet in der gezeigten Ausführungsform von Figur 1 und 2 eine in sich geschlossene Baueinheit. Er dient nur zur Beaufschlagung der Prozessachse (13) und zur Erzeugung des Vor- und/oder Rückhubs des Werkstücks (3) bzw. des Werkstückhalters (9). Der Vorschubantrieb (12) hat einen in sich geschlossenen Hydraulikkreis (20), der ggf. eine Lebensdauerfüllung mit einem Hydraulikmedium besitzt. In der geschlossenen Baueinheit hat der Vorschubantrieb (12) nach außen lediglich eine elektrische Schnittstelle zur Übertragung von elektrischen Leistungs- und Signal- bzw. Steuerströmen.

Der hydraulische Zylinder (14) kann in unterschiedlicher Weise ausgebildet sein. Bevorzugt handelt es sich um einen doppeltwirkenden Zylinder mit einem beidseits beaufschlagten Kolben (15) und zumindest einer nach außen tretenden Kolbenstange (16), die an ihrem freien Ende mit dem Werkstück (3) oder seinem Werkstückhalter (9) verbunden ist und hierauf entlang der linearen und der Kolbenstangenachse entsprechenden Prozessachse (13) zusammenwirkt.

Der Zylinder (14) kann z.B. gemäß Figur 2 als Differenzialzylinder mit nur einer Kolbenstange (16) ausgebildet sein, bei dem die Füll- und Fördermengen beidseits des Kolbens (15) unterschiedlich sind. Alternativ kann gemäß der gestrichelten Darstellung von Figur 2 der Zylinder (14) als Gleichgangzylinder ausgebildet sein und eine zweite Kolbenstange zur Egalisierung der Füll- und Fördermengen aufweisen.

Der Hydraulikkreis ist an zwei endseitigen Stellen (A,B) an den Zylinder (14) beidseits des Kolbens (15) angeschlossen. Die eine oder mehreren Pumpen (18,19) fördern in beiden Richtungen und bewirken sowohl den Vorhub, als auch den Rückhub des Zylinders (14) und seiner Kolbenstange (16). Beim Rückhub kann beim gezeigten Differenzialzylinder die Fördermenge zum Ausgleich des Stangenvolumens reduziert sein. Alternativ kann durch Ventile, Zwischenspeicher oder auf andere Weise das Stangenvolumen kompensiert werden.

In der gezeigten Ausführungsform sind die beiden Pumpen (18,19) im Hydraulikkreis (20) parallel geschaltet. Sie sind außerdem untereinander quer verbunden und auch an den Druckausgleich (21) angeschlossen.

Der Vorschubantrieb (12) weist eine oder mehrere Messeinrichtungen (23,24,25) für Prozessparameter beim Vorschub auf. Diese Prozessparameter können z.B. den Druck des Hydraulikmediums und/oder die Position der Kolbenstange (16) betreffen. Die Messeinrichtungen (23,24,25) weisen hierfür einen oder mehrere geeignete Sensoren auf. Vorzugsweise sind die Messeinrichtungen (23,24,25) am Zylinder (14) angeordnet.

Die Messeinrichtungen (23,24) erfassen z. B. den hydraulischen Druck an den Anschlussstellen (A,B) bzw. den Anschlusssträngen des Hydraulikkreises (20) vor und hinter dem Kolben (15). Die Messeinrichtung (25) ist z.B. der Kolbenstange (16) zugeordnet und misst deren Position oder deren Weg beim Vorhub und Rückhub entlang der Prozessachse (13). Alternativ kann die Messeinrichtung (25) z.B. dem Werkstückhalter (9) oder dem Schlitten (11) zugeordnet sein. Aus Redundanzgründen oder dgl. kann die Messeinrichtung (25) auch mehrfach vorhanden und/oder an verschiedenen der genannten Stellen angeordnet sein.

Die Pressschweißvorrichtung (1), insbesondere in der Ausbildung als Reibschweißvorrichtung, kann eine Regelung für den Pressschweiß-, insbesondere Reibschweißprozess, aufweisen, mit der gezielt der Vorschub und die Werkstückverkürzung im Prozess beeinflusst werden können. Hierdurch können insbesondere unterschiedliche Ausgangslängen der Werkstücke (2,3) kompensiert und eine einheitliche und exakte Gesamtlänge des fertig geschweißten Werkstücks eingestellt und erzielt werden.

Eine Pressschweißvorrichtung (1) zum Schweißen mit einem magnetisch bewegten Lichtbogen kann ebenfalls eine solche Regelung aufweisen. Sie kann außerdem eine Einrichtung zur Erfassung und Analyse von Prozessparametern, insbesondere der Lichtbogenspannung, aufweisen und den Vorschub entsprechend steuern oder regeln. Sie kann hierfür z.B. entsprechend der DE 20 2008 005 534 U1 ausgebildet sein.

Figur 3 verdeutlicht den Vorschub bei einem Prozess-Zyklus. Die Pressschweißvorrichtung (1) kann manuell oder automatisch mit Werkstücken (2,3) beladen und entladen werden. Hierfür bewegt die Vorschubeinrichtung (7) den Werkstückhalter (9) bzw. den Schlitten (11) in eine zurückgezogene Ladeposition (LP). Dementsprechend werden auch das beaufschlagte Werkstück (3) und die Kolbenstange (16) des hydraulischen Zylinders (14) bewegt. Die Ladeposition (LP) ist z.B. die in Figur 1 gezeigte Ausgangsstellung (27) mit distanzierten Werkstücken (2,3). Die Ladeposition (LP) kann werkstückabhängig vorgegeben sein. Sie kann auch gemäß Figur 3 variieren.

Im Prozess wird die Kolbenstange (16) bzw. das beaufschlagte Werkstück (3) aus der Ladeposition (LP) zunächst mit einem Vorhub (ve) im Eilgang bis zu einer Kontaktposition (KP) der Werkstücke (2,3) bewegt. Die Kontaktposition (KP) kann ggf. am Vorhubende im Schleichgang angefahren werden.

Beim Reibschweißen gemäß Figur 3 erfolgt anschließend der weitere Vorhub (vp) im Prozess bis zum Erreichen einer Endposition (EP). Dieser Vorhub (vp) kann sich in einen Reibvorschub und in einen Stauchvorschub unterteilen. Bei diesen verschiedenen Vorschubbewegungen werden die Positionen und/oder Wege durch die Messeinrichtung (25) erfasst und an die Steuerung (26) gemeldet, die nach dieser Ist-Position den Vorschub regelt. Die direkte Regelung des Vorschubs kann am hydraulischen Zylinder (14) des Vorschubantriebs (12) erfolgen.

Die Endposition (EP) im Prozess kann werkstückabhängig variabel sein und liegt vor einer Maximalposition (MP). Nach Beendigung des Pressschweißprozesses folgt der Rückhub (re) bis zur Ladeposition (LP), der im Eilgang geschehen kann.

Beim Schweißen mit einem magnetisch bewegten Lichtbogen kann alternativ nach Erreichen der Kontaktposition (KP) ein definierter Rückhub zur axialen Distanzierung der Werkstücke (2,3) und zum Zünden des Lichtbogens erfolgen. Der Werkstückabstand kann dabei über die vorgenannte Regelung gemäß der DE 20 2008 005 534 U1 verändert werden. Anschließend erfolgt der Stauchhub in Vorwärtsrichtung bis zur Endposition (EP). Die verschiedenen Vorschubbewegungen können ebenfalls in der zum Reibschweißen vorbeschriebenen Weise von der Steuerung (26) nach der erfassten Ist-Position geregelt werden.

Bei der bevorzugten Ausführungsform mit zwei oder mehr Pumpen (18,19) können für den Eilgang beim Vorhub und/oder Rückhub mehrere, insbesondere beide Pumpen (18,19) gemeinsam den hydraulischen Zylinder (14) beaufschlagen. Für den Vorhub (vp) in der Reib- und Stauchphase kann vorgesehen sein, dass nur eine Pumpe (18) den Zylinder (14) beaufschlagt. Dabei kann z.B. die zweite Pumpe (19) weggeschaltet werden, so dass nur die eine, bzw. erste Pumpe (18), den Zylinder (14) beaufschlagt. Dies ist für die Regelgenauigkeit von Vorteil. Entsprechendes gilt für den Rückhub, den Regelhub und den Stauchhub beim Schweißen mit magnetisch bewegtem Lichtbogen.

Das Zu- und Wegschalten von einer oder mehreren Pumpen kann auf anderem Wege erfolgen, z.B. durch ein Abkuppeln vom Antriebsmotor oder durch Abschalten eines separaten eigenen Antriebsmotors. Das Schaltelement (22) kann dabei z.B. mechanisch oder elektrisch ausgebildet sein.

### BEZUGSZEICHENLISTE

- 1: Pressschweißvorrichtung, Reibschweißvorrichtung
- 2: Werkstück
- 3: Werkstück
- 4: Gestell
- 5: Plastifizierungseinrichtung
- 6: Positionier- und Staucheinrichtung
- 7: Vorschubeinrichtung
- 8: Werkstückhalter, Spanneinrichtung
- 9: Werkstückhalter, Spanneinrichtung
- 10: Drehantrieb
- 11: Schlitten
- 12: Vorschubantrieb hydrostatisch
- 13: Prozessachse
- 14: Zylinder, Hydraulikzylinder, Differentialzylinder
- 15: Kolben
- 16: Kolbenstange
- 17: Antriebsmotor, Servomotor
- 18: Pumpe
- 19: Pumpe
- 20: Hydraulikkreis
- 21: Druckausgleich, Ausgleichsbehälter
- 22: Schaltelement, Mehrwegeventil
- 23: Messeinrichtung für Druck
- 24: Messeinrichtung für Druck
- 25: Messeinrichtung für Position
- 26: Steuerung
- 27: Ausgangsstellung

- ve: Vorhub im Eilgang
- vp: Vorhub im Prozess
- re: Rückhub im Eilgang
- LP: Ladeposition
- KP: Kontaktposition
- EP: Endposition
- MP: Maximalposition

## Patentansprüche

1. Pressschweißvorrichtung, insbesondere Reibschweißvorrichtung oder Schweißvorrichtung mit einem magnetisch bewegten Lichtbogen, mit einer Plastifizierungseinrichtung (5), einer Positionier- und Staucheinrichtung (6) und einer Steuerung (26), wobei die Pressschweißvorrichtung (1) eine Vorschubeinrichtung (7) für ein Werkstück (2,3) und für die Prozessachse (13) mit einem steuerbaren oder regelbaren hydraulischen Vorschubantrieb (12) aufweist, **dadurch gekennzeichnet, dass** der Vorschubantrieb (12) als steuerbarer oder regelbarer elektrohydraulischer Direktantrieb für die Prozessachse (13) ausgebildet ist, wobei der Vorschubantrieb (12) einen elektrischen Antriebsmotor (17), insbesondere einen elektrischen Servomotor, einen hydraulischen Zylinder (14) und eine damit verbundene sowie von dem elektrischen Antriebsmotor (17), insbesondere dem elektrischen Servomotor, angetriebene Pumpe (18,19) aufweist, wobei der Vorschubantrieb (12) über den elektrischen Antriebsmotor (17) steuerbar oder regelbar ist und wobei der Vorschubantrieb (12) einen geschlossenen Hydraulikkreis (20) aufweist, der den/die Zylinder (14) und die Pumpe(n) (18,19) verbindet.

2. Pressschweißvorrichtung nach Anspruch 1, **dadurch gekennzeichnet, dass** der hydraulische, insbesondere hydrostatische Vorschubantrieb (12) eine in sich geschlossene Baueinheit bildet und direkt an der Pressschweißvorrichtung (1), insbesondere direkt am hydraulischen Zylinder (14), angebaut ist.

3. Pressschweißvorrichtung nach Anspruch 1 oder 2, **dadurch gekennzeichnet, dass** der hydraulische Zylinder (14) mit mehreren, insbesondere zwei oder drei, Pumpen (18,19) verbunden ist.

4. Pressschweißvorrichtung nach einem der vorhergehenden Ansprüche, **dadurch gekennzeichnet, dass** bei einer Mehrfachanordnung von Pumpen (18,19) mindestens eine Pumpe (18,19) zu- oder wegschaltbar ist.

5. Pressschweißvorrichtung nach Anspruch 3 oder 4, **dadurch gekennzeichnet, dass** die eine oder mehreren Pumpen (18,19) in beiden Richtungen fördern und sowohl den Vorhub, als auch den Rückhub des Zylinders (14) und seiner Kolbenstange (16) bewirken.

6. Pressschweißvorrichtung nach einem der vorhergehenden Ansprüche, **dadurch gekennzeichnet, dass** der Zylinder (14) als doppeltwirkender Zylinder für Vor- und Rückhub, insbesondere als Differentialzylinder oder als Gleichgangzylinder, ausgebildet ist.

7. Pressschweißvorrichtung nach einem der vorhergehenden Ansprüche, **dadurch gekennzeichnet, dass** der Vorschubantrieb (12) eine oder mehrere Messeinrichtungen (23,24,25), insbesondere am Hydraulikzylinder (14), für Prozessparameter beim Vorschub, insbesondere Druck und/oder Position, aufweist.

8. Pressschweißvorrichtung nach Anspruch 7, **dadurch gekennzeichnet, dass** die Messeinrichtungen (23,24) den hydraulischen Druck an den Anschlussstellen (A,B) bzw. den Anschlusssträngen des Hydraulikkreises (20) vor und hinter dem Kolben (15) erfassen und/oder die Messeinrichtung (25) der Kolbenstange (16) des Hydraulikzylinders (14) zugeordnet ist und deren Position oder deren Weg beim Vorhub und Rückhub entlang der Prozessachse (13) misst.

9. Verfahren zum Pressschweißen, insbesondere Reibschweißen oder Schweißen mit einem magnetisch bewegten Lichtbogen, von Werkstücken (2,3) mittels einer gesteuerten (26) Pressschweißvorrichtung (1), bei der die Werkstücke (2,3) mittels einer Plastifizierungseinrichtung (5) plastifiziert und mittels einer Positionier- und Staucheinrichtung (6) relativ zueinander positioniert sowie entlang einer Prozessachse (13) gestaucht werden, wobei ein Werkstück (2,3) entlang der Prozessachse (13) mittels einer Vorschubeinrichtung (7) mit einem gesteuerten oder geregelten hydraulischen Vorschubantrieb (12) bewegt wird, **dadurch gekennzeichnet, dass** der Vorschub mit einem Vorschubantrieb (12) erfolgt, der als gesteuerter oder geregelter elektrohydraulischer Direktantrieb für die Prozessachse (13) ausgebildet ist, wobei der Vorschubantrieb (12) einen elektrischen Antriebsmotor (17), insbesondere einen elektrischen Servomotor, einen hydraulischen Zylinder (14) und eine damit verbundene sowie von dem elektrischen Antriebsmotor (17), insbesondere dem einem elektrischem Servomotor, angetriebene Pumpe (18,19) aufweist, wobei der Vorschubantrieb (12) über den elektrischen Antriebsmotor (17) gesteuert oder geregelt wird und wobei der Vorschubantrieb (12) einen geschlossenen Hydraulikkreis (20) aufweist, der den/die Zylinder (14) und die Pumpe(n) (18,19) verbindet.

10. Verfahren nach Anspruch 9, **dadurch gekennzeichnet, dass** im Prozess eine Kolbenstange (16) eines hydraulischen Zylinders (14) des Vorschubantriebs (12) aus einer zurückgezogenen Ladeposition (LP) mit einem Vorhub (ve) im Eilgang bis zu einer Kontaktposition (KP) der Werkstücke (2,3) bewegt wird, wobei die Kontaktposition (KP) ggf. am Vorhubende im Schleichgang angefahren wird.

11. Verfahren nach Anspruch 10, **dadurch gekennzeichnet, dass** beim Reibschweißen anschließend ein weiterer Vorhub (vp) im Prozess bis zum Erreichen einer Endposition (EP) erfolgt, wobei der Vorhub (vp) sich in einen Reibvorschub und in einen Stauchvorschub unterteilt.

12. Verfahren nach Anspruch 10, **dadurch gekennzeichnet, dass** beim Schweißen mit einem magnetisch bewegten Lichtbogen nach Erreichen der Kontaktposition (KP) ein definierter Rückhub zur axialen Distanzierung der Werkstücke (2,3) und zum Zünden des Lichtbogens sowie anschließend ein Stauchhub in Vorwärtsrichtung bis zu einer Endposition (EP) erfolgt.

13. Verfahren nach einem der Ansprüche 10 bis 12, **dadurch gekennzeichnet, dass** nach Beendigung des Pressschweißprozesses ein Rückhub (re) im Eilgang bis zur Ladeposition (LP) erfolgt.

14. Verfahren nach Anspruch 10 oder 13, **dadurch gekennzeichnet, dass** für den Eilgang beim Vorhub und/oder Rückhub mehrere, insbesondere zwei Pumpen (18,19), gemeinsam den hydraulischen Zylinder (14) beaufschlagen.

15. Verfahren nach Anspruch 10, 13 oder 14, **dadurch gekennzeichnet, dass** für den Vorhub (vp) in der Reib- und Stauchphase beim Reibschweißen oder für den Rückhub, Regelhub und Stauchhub beim Schweißen mit magnetisch bewegtem Lichtbogen nur eine Pumpe (18) den Zylinder (14) beaufschlagt.

## Claims

1. Pressure welding device, in particular friction welding device or welding device with a magnetically impelled arc, comprising a plasticizing unit (5), a positioning and compressing unit (6) and a controller (26), wherein the pressure welding device (1) has an advancing unit (7) for a workpiece (2, 3) and for the process axis (13) with an open-loop or closed-loop controllable hydraulic advancing drive (12), **characterized in that** the advancing drive (12) is formed as an open-loop or closed-loop controllable electro-hydraulic direct drive for the process axis (13), wherein the advancing drive (12) has an electrical drive motor (17), in particular an electrical servo motor, a hydraulic cylinder (14) and a pump (18, 19), which is connected thereto and is driven by the electrical drive motor (17), in particular the electrical servo motor, wherein the advancing drive (12) can be controlled in an open-loop or closed-loop manner by way of the electrical drive motor (17) and wherein the advancing drive (12) has a closed hydraulic circuit (20), which connects the cylinder(s) (14) and the pump(s) (18, 19).

2. Pressure welding device according to Claim 1, **characterized in that** the hydraulic, in particular hydrostatic, advancing drive (12) forms a self-contained structural unit and is mounted directly on the pressure welding device (1), in particular directly on the hydraulic cylinder (14).

3. Pressure welding device according to Claim 1 or 2, **characterized in that** the hydraulic cylinder (14) is connected to a number of pumps (18, 19), in particular two or three.

4. Pressure welding device according to one of the preceding claims, **characterized in that** in a multiple arrangement of pumps (18, 19) at least one pump (18, 19) can be activated or deactivated.

5. Pressure welding device according to Claim 3 or 4, **characterized in that** the one or more pumps (18, 19) pump in both directions and bring about both the forward stroke and the return stroke of the cylinder (14) and its piston rod (16).

6. Pressure welding device according to one of the preceding claims, **characterized in that** the cylinder (14) is formed as a double-acting cylinder for forward and return strokes, in particular as a differential cylinder or as a synchronous cylinder.

7. Pressure welding device according to one of the preceding claims, **characterized in that** the advancing drive (12) has one or more measuring units (23, 24, 25), in particular on the hydraulic cylinder (14), for process parameters during the advancement, in particular pressure and/or position.

8. Pressure welding device according to Claim 7, **characterized in that** the measuring units (23, 24) record the hydraulic pressure at the connection points (A, B) or the connection sections of the hydraulic circuit (20) upstream and downstream of the piston (15) and/or the measuring unit (25) is assigned to the piston rod (16) of the hydraulic cylinder (14) and measures the position or displacement thereof during the forward stroke and return stroke along the process axis (13).

9. Method for pressure welding, in particular friction welding or welding with a magnetically impelled arc, workpieces (2, 3) by means of an open-loop controlled (26) pressure welding device (1), in which the workpieces (2, 3) are plasticized by means of a plasticizing unit (5) and positioned in relation to one another and compressed along a process axis (13) by means of a positioning and compressing unit (6), wherein a workpiece (2, 3) is moved along the process axis (13) by means of an advancing unit (7) with an open-loop or closed-loop controlled hydraulic advancing drive (12), **characterized in that** the advancement is performed by an advancing drive (12) which is formed as an open-loop or closed-loop controlled electro-hydraulic direct drive for the process axis (13), wherein the advancing drive (12) has an electrical drive motor (17), in particular an electrical servo motor, a hydraulic cylinder (14) and a pump (18, 19), which is connected thereto and is driven by the electrical drive motor (17), in particular the electrical servo motor, wherein the advancing drive (12) is controlled in an open-loop or closed-loop manner by way of the electrical drive motor (17) and wherein the advancing drive (12) has a closed hydraulic circuit (20), which connects the cylinder(s) (14) and the pump(s) (18, 19).

10. Method according to Claim 9, **characterized in that** in the process a piston rod (16) of a hydraulic cylinder (14) of the advancing drive (12) is moved from a withdrawn loading position (LP) by an advancement (ve) at rapid speed to a contact position (KP) of the workpieces (2, 3), wherein the contact position (KP) is possibly approached at the end of the forward stroke at creep speed.

11. Method according to Claim 10, **characterized in that**, in the case of friction welding, a further forward stroke (vp) subsequently takes place in the process until an end position (EP) is reached, wherein the forward stroke (vp) is divided into a friction advancement and a compression advancement.

12. Method according to Claim 10, **characterized in that**, in the case of welding with a magnetically impelled arc, after the contact position (KP) is reached a defined return stroke takes place to create an axial distance between the workpieces (2, 3) and to ignite the arc, and a compression stroke subsequently takes place in the forward direction up to an end position (EP).

13. Method according to one of Claims 10 to 12, **characterized in that**, after completion of the pressing welding process, a return stroke (re) takes place at rapid speed up to the loading position (LP).

14. Method according to Claim 10 or 13, **characterized in that** a number of pumps (18, 19), in particular two, act together on the hydraulic cylinder (14) for the rapid speed during the forward stroke and/or return stroke.

15. Method according to Claim 10, 13 or 14, **characterized in that** only one pump (18) acts on the cylinder (14) for the advancement (vp) in the friction phase and compression phase in the case of friction welding or for the return stroke, control stroke and compression stroke in the case of welding with a magnetically impelled arc.

## Revendications

1. Dispositif de soudage par pression, notamment dispositif de soudage par friction ou dispositif de soudage avec arc activé par aimant, doté d'un système de plastification (5), d'un système de positionnement et de refoulement(6) et d'un système de commande (26), le dispositif de soudage par pression (1) comportant un système d'avance (7) pour une pièce à usiner (2,3) et pour l'axe de processus (13), avec un entraînement d'avance hydraulique (12) susceptible d'être commandé ou réglé, **caractérisé en ce que** l'entraînement d'avance (12) est conçu sous la forme d'un entraînement direct électrohydraulique susceptible d'être commandé ou réglé pour l'axe de processus (13), l'entraînement d'avance (12) comportant un moteur d'entraînement électrique (17), notamment un servomoteur électrique, un vérin hydraulique (14) et une pompe (18,19) reliée avec celui-ci, entraînée par le moteur d'entraînement électrique (17), notamment le servomoteur électrique, l'entraînement d'avance (12) étant susceptible d'être commandé ou réglé par l'intermédiaire du moteur d'entraînement électrique (17) et l'entraînement d'avance (12) comportant un circuit hydraulique fermé (20) qui relie le/les vérin(s) (14) et la pompe(n) (18, 19).

2. Dispositif de soudage par pression selon la revendication 1, **caractérisé en ce que** l'entraînement d'avance (12) hydraulique, notamment hydrostatique forme un ensemble fermé sur soi et est monté directement sur le dispositif de soudage par pression (1), notamment directement sur le vérin hydraulique (14).

3. Dispositif de soudage par pression selon la revendication 1 ou 2, **caractérisé en ce que** le vérin hydraulique (14) est relié avec plusieurs, notamment avec deux ou trois pompes (18, 19).

4. Dispositif de soudage par pression selon l'une quelconque des revendications précédentes, **caractérisé en ce que** dans le cas d'un placement multiple de pompes (18, 19), au moins une pompe (18, 19) est activable ou désactivable.

5. Dispositif de soudage par pression selon la revendication 3 ou 4, **caractérisé en ce que** l'une ou les plusieurs pompes (18,19) convoient dans les deux directions et provoquent aussi bien la course aller, qu'également la course retour du vérin (14) et de sa tige de piston (16).

6. Dispositif de soudage par pression selon l'une quelconque des revendications précédentes, **caractérisé en ce que** le vérin (14) est conçu sous la forme d'un vérin à double action, pour la course aller et retour, notamment comme vérin différentiel ou comme vérin synchrone.

7. Dispositif de soudage par pression selon l'une quelconque des revendications précédentes, **caractérisé en ce que** l'entraînement d'avance (12) comporte un ou plusieurs dispositifs de mesure (23, 24, 25), notamment sur le vérin hydraulique (14), pour des paramètres de processus lors de l'avance, notamment la pression et/ou la position.

8. Dispositif de soudage par pression selon la revendication 7, **caractérisé en ce que** les dispositifs de mesure (23, 24) détectent la pression hydraulique sur les zones de raccordement (A, B) ou sur les tronçons de raccordement du circuit hydraulique (20), à l'avant et à l'arrière du piston (15) et/ou le système de mesure (25) est associé à la tige de piston (16) du vérin hydraulique (14) et mesure sa position ou son trajet, lors de la course aller et retour le long de l'axe de processus (13).

9. Procédé de soudage par pression, notamment de soudage par friction ou de soudage avec arc activé par aimant de pièces à usiner (2,3) à l'aide d'un dispositif de soudage par pression (1) commandé (26), lors duquel les pièces à usiner (2,3) sont plastifiées à l'aide d'un système de plastification (5) et positionnées à l'aide d'un système de positionnement et de refoulement (6), l'une par rapport à l'autre ainsi que le long d'un axe de processus (13), une pièce à usiner (2,3) étant déplacée le long de l'axe de processus (13) à l'aide d'un système d'avance (7) par un entraînement d'avance hydraulique (12) commandé et réglé, **caractérisé en ce que** l'avance s'effectue par un entraînement d'avance (12) qui est conçu sous la forme d'un entraînement direct électrohydraulique commandé ou réglé pour l'axe de processus (13), l'entraînement d'avance (12) comportant un moteur d'entraînement électrique (17), notamment un servomoteur électrique, un vérin hydraulique (14) et une pompe (18, 19) reliée avec celui-ci et entraînée par le moteur d'entraînement électrique (17), notamment par le servomoteur électrique, l'entraînement d'avance (12) étant commandé ou réglé par l'intermédiaire du moteur d'entraînement électrique (17) et l'entraînement d'avance (12) comportant un circuit hydraulique fermé (20) qui relie le/les vérin(s) (14) et la pompe(n) (18,19).

10. Procédé selon la revendication 9, **caractérisé en ce que** lors du processus, une tige de piston (16) d'un vérin hydraulique (14) de l'entraînement d'avance (12) est déplacée d'une position de chargement (LP) en retrait, par une course aller (ve) en vitesse rapide, jusqu'à une position de contact (KP) des pièces à usiner (2,3), la position de contact (KP) étant abordée le cas échéant à la fin de la course aller, en vitesse lente.

11. Procédé selon la revendication 10, **caractérisé en ce que** lors du soudage par friction, une course avant (vp) supplémentaire s'effectue par la suite dans le processus jusqu'à l'atteinte d'une position finale (EP), la course aller (vp) se divisant en une avance par friction et en une avance par refoulement.

12. Procédé selon la revendication 10, **caractérisé en ce que** lors du soudage avec arc activé par aimant, après l'atteinte de la position de contact (KP), il s'effectue une course retour définie pour le distancement axial des pièces à usiner (2,3) et pour l'amorçage de l'arc électrique, ainsi que par la suite une course de refoulement en direction avant, jusqu'à une position finale (EP).

13. Procédé selon l'une quelconque des revendications 10 à 12, **caractérisé en ce qu'**après l'achèvement du processus de soudage par pression, il s'effectue une course retour (re) en vitesse rapide, jusqu'à la position de chargement (LP).

14. Procédé selon la revendication 10 ou 13, **caractérisé en ce que** pour la vitesse rapide lors de la course aller et/ou de la course retour, plusieurs, notamment deux pompes (18, 19), agissent en commun sur le vérin hydraulique (14).

15. Procédé selon la revendication 10, 13 ou 14, **caractérisé en ce que** pour la course aller (vp) dans la phase de friction et de refoulement lors du soudage par friction ou pour la course retour, la course de réglage et la course de refoulement lors du soudage avec arc activé par aimant, une seule pompe (18) agit sur le vérin (14).
